# EUROPÄISCHE PATENTANMELDUNG

(11) **EP 0 655 358 A1**
(43) Veröffentlichungstag der Anmeldung: **31.05.1995**
(21) Anmeldenummer: 94112869.6
(22) Anmeldetag: 18.08.1994
(51) Int. Cl.: B60J 1/12

(54) **Aggregat zum Verstellen von zu einem Kraftfahrzeug gehörenden Bauteilen zwischen zwei Endlagen**

(30) Priorität: 15.09.1993 DE 9313949 U
(71) Anmelder: ROBERT BOSCH GMBH, 70442 Stuttgart (DE)
(72) Erfinder: Ursel, Eckhard, Dipl.-Ing., D-77815 Bühl (DE); Haussecker, Walter, Dipl.-Ing., D-77830 Bühlertal (DE); Kurzmann, Rainer, Dipl.-Ing., D-77855 Achern (DE); Bock, Olaf, Dipl.Ing., D-77815 Bühl (DE)

(57) **Zusammenfassung**

Es wird ein Aggregat (10) vorgeschlagen, das zum Verstellen von zu einem Kraftfahrzeug gehörenden Bauteilen zwischen zwei Endlagen dient. Das Stellaggregat (10) umfaßt einen drehrichtungsumkehrbaren, elektrischen Antriebsmotor (12) und ein diesem nachgeordnetes Schneckengetriebe (14), dessen Schneckenwelle (16) zwischen zwei in Richtung der Wellendrehachse gesehen einander zugewandten, mit Abstand voneinander angeordneten Schultern (22,24) angeordnet und mit den Schultern zugeordneten Gegenschultern versehen ist wobei ein Paar von Schulter und Gegenschulter (26,28) durch vorgespannte Federmittel (32,34) aneinander angelegt sind. Um beim Wechsel der Drehrichtung auftretende, unerwünschte Geräusche zu vermeiden, ist auch das andere Paar von Schulter und Gegenschulter durch vorgespannte Federmittel aneinander angelegt und die Schneckenwelle ist zusammen mit den an ihren Gegenschultern angelegten Schultern in Richtung ihrer Drehachse gegen die Kraft der einen oder der anderen Federmittel bewegbar.

## Beschreibung

### Stand der Technik

Stellaggregate nach dem Oberbegriff des Anspruchs 1 werden beispielsweise zum Verschieben von Fensterscheiben und Sitzen in Kraftfahrzeugen, zum Bewegen von Schiebedächern und dgl. eingesetzt. Durch das Wesen eines Schneckengetriebes wird während des Betriebs die Schneckenwelle, welche häufig eine Verlängerung der Motorwelle ist, je nach Drehrichtung entweder in Richtung zu ihrem einen oder in Richtung zu ihrem anderen Ende axial belastet. Diese Belastung wird üblicherweise an Schultern des Aggregatgehäuses abgefangen, an denen die Schneckenwelle mit Gegenschultern anliegt. Solange die Schneckenwelle kein Axialspiel hat funktioniert eine solche Anordnung zufriedenstellend. Wenn jedoch nach einer gewissen Laufzeit die Schneckenwelle wegen dem unvermeidbaren Verschleiß Axialspiel bekommt, tritt bei jeder Drehrichtungsänderung ein Pochgeräusch auf, wenn die Welle nach Überwindung des Längsspiels an der einen oder der anderen Gehäuseschulter anschlägt.

### Vorteile der Erfindung

Das erfindungsgemäße Stellaggregat mit den kennzeichnenden Merkmalen des Hauptanspruchs hat demgegenüber den Vorteil, daß durch die Anordnung von elastisch gelagerten Schultern bzw. Gegenschultern an beiden axialen Anläufen der Schneckenwelle die Geräuschbildung beim Ändern der Motor-Drehrichtung dauerhaft vermieden ist.

Durch die in den Unteransprüchen aufgeführten Maßnahmen sind vorteilhafte Weiterbildungen und Verbesserungen des im Hauptanspruch angegebenen Stellaggregats möglich.

### Zeichnung

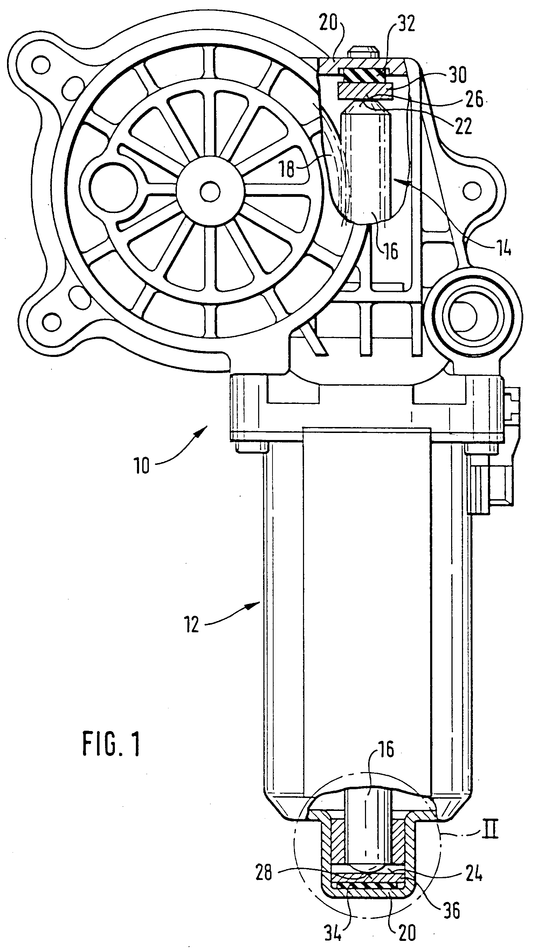

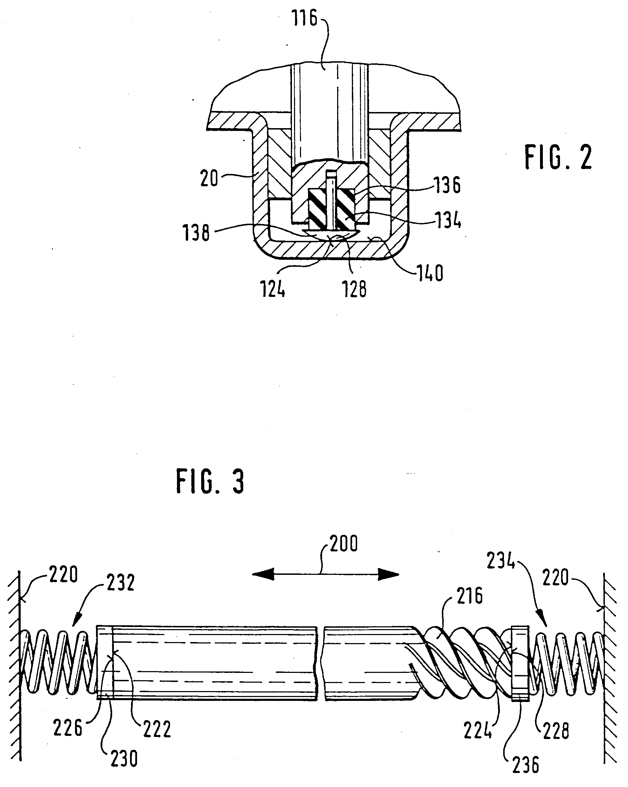

Ausführungsbeispiele der Erfindung sind in der Zeichnung dargestellt und in der nachfolgenden Beschreibung näher erläutert. Es zeigen Figur 1 ein Stellaggregat, das einen elektrischen Antriebsmotor und ein diesem nachgeordnetes Schneckengetriebe sowie ein gemeinsames, mehrteiliges, teilweise aufgebrochenes Gehäuse aufweist, Figur 2 eine Einzelheit bei II in Figur 1, die eine andere Ausführungsform der Erfindung in vergrößerter Darstellung zeigt und Figur 3 eine vereinfachte Prinzipdarstellung der Erfindung, unmaßstäblich dargestellt.

### Beschreibung der Ausführungsbeispiele

Ein in Figur 1 dargestelltes Aggregat 10 dient beim Ausführungsbeispiel zum Verstellen von in einem Kraftfahrzeug angeordneten Fensterscheiben. Es weist einen drehrichtungsumkehrbaren, elektrischen Antriebsmotor 12 auf, dem ein als Schneckengetriebe 14 ausgebildetes Untersetzungsgetriebe nachgeordnet ist. Das Schneckengetriebe 14 hat eine Schneckenwelle 16 und ein Schneckenrad 18, das über eine nicht dargestellte Abtriebswelle mit einem Fensterhebermechanismus wirkverbunden ist. Die Schneckenwelle 16 bildet mit einem nicht sichtbaren mittleren Abschnitt die Ankerwelle des elektrischen Antriebsmotors 10. Das Verstellaggregat 10 weist ein Gehäuse 20 auf, das sowohl den elektrischen Antriebsmotor 12 als auch das Schneckengetriebe 14 umschließt. Die Schneckenwelle 16 ist zwischen zwei in Richtung ihrer Drehachse gesehen einander zugewandten, mit Abstand voneinander angeordneten Schultern 22 und 24 angeordnet, die ihrerseits an Aggregatgehäuse 20 abgestützt sind. Den Schultern 22 und 24 des Gehäuses 20 sind Gegenschultern 26, 28 der Schneckenwelle 16 zugeordnet. Beim Ausführungsbeispiel gemäß Figur 1 sind diese Gegenschultern durch die balligen, stirnseitigen Enden der Schneckenwelle 16 gebildet. Wie Figur 1 weiter zeigt befindet sich in Richtung der Drehachse der Schneckenwelle 16 gesehen zwischen der als Anlaufscheibe 30 ausgebildeten Schulter 22 und dem Gehäuse 20 Federmittel 32, die beim Ausführungsbeispiel durch eine Scheibe aus elastischem Material gebildet sind. Die andere Schulter 24 ist über Federmittel 34 am Gehäuse 20 abgestützt. Auch die Federmittel 34 sind durch ein scheibenförmiges Bauelement aus einem elastischen Material gebildet. Die Schulter 24 selbst ist an einer Anlaufscheibe 36 ausgebildet, welche über die Federmittel 34 am Gehäuse 20 abgestützt ist.

Bei einer anderen, in Figur 2 dargestellten Ausführungsform der Erfindung sind die Federmittel 134 in einer stirnseitigen Ausnehmung 136 der Schneckenwelle 116 angeordnet. Auf der dem Gehäuse 20 zugewandten Seite sind an den aus elastischem Material bestehenden, blockartigen Federmitteln 134 ein Anlaufelement 138 angeordnet, über das die Schneckenwelle 116 an der Innenwand 140 des Gehäuses 20 anläuft. Die Schulter 124 ist bei dieser Ausführungsform direkt am Gehäuse ausgebildet und die Gegenschulter 128 ergibt sich an der Schulter 124 zugewandten Oberflache des Anlaufelements 138.

Bei den beschriebenen Ausführungsformen ist darauf zu achten, daß die Federmittel 32, 34 bzw. 134 genügend Freiraum haben, in den das bei Belastung der Federmittel verdrängte Material der Federmittel ausweichen kann.

Die in Figur 3 dargestellte Prinzipanordnung zeigt, daß die Schneckenwelle 216 mit ihren beiden Endstirnflächen (den Gegenschultern 226, 228) an Schultern 222 und 224 anliegt, wobei die Schultern über Federmittel 232, 234 an gestellfesten Wänden 220 abgestützt sind. Die Schultern 222 und 224 sind an Anlaufscheiben 230 und 236 ausgebildet. Die beiden Federmittel 232 und 234 sind vorgespannt, gestatten jedoch noch eine Axialbewegung der Schneckenwelle in Richtung des Doppelpfeiles 200. Es ist jedoch auch denkbar die Federmittel 232 und 234 zwischen den stirnseitigen Endflächen der Schneckenwelle 216 und den Anlaufscheiben 230, 236 anzuordnen. Eine solche Anordnung ist in Figur 2 gegenständlich dargestellt.

## Patentansprüche

1. Aggregat zum Verstellen von zu einem Kraftfahrzeug gehörenden Bauteilen zwischen zwei Endlagen, mit einem drehrichtungsumkehrbaren, elektrischen Antriebsmotor und einem diesem nachgeordneten Schneckengetriebe, dessen Schneckenwelle zwischen zwei in Richtung der Wellendrehachse gesehen einander zugewandten, mit Abstand voneinander angeordneten Schultern angeordnet und mit den Schultern zugeordneten Gegenschultern versehen ist, dadurch gekennzeichnet, daß die beiden Paare (22, 26) bzw. (24, 28) von Schulter und Gegenschulter durch vorgespannte Federmittel (32) bzw. (34) aneinander angelegt sind und die Schneckenwelle (16) zusammen mit den an ihren Gegenschultern (26, 28) angelegten Schultern (22, 24) in Richtung ihrer Drehachse gegen die Kraft der einen oder der anderen Federmittel (32) bzw. (36) bewegbar ist (Doppelpfeil 200).

2. Aggregat nach Anspruch 1, dadurch gekennzeichnet, daß die Schneckenwelle (16) mit einem Mittelabschnitt die Welle des elektrischen Antriebsmotors (12) bildet.

3. Aggregat nach einem der Ansprüche 1 oder 2, dadurch gekennzeichnet, daß die Schultern (22, 24) an einem das Aggregat (10) umschließenden Gehäuse (20) angeordnet sind.

4. Aggregat nach einem der Ansprüche 1 bis 3, dadurch gekennzeichnet, daß die Gegenschultern (26, 28) an den Endstirnseiten der Schneckenwelle (16) angeordnet sind.

5. Aggregat nach einem der Ansprüche 3 oder 4, dadurch gekennzeichnet, daß die Schultern (22, 24) an Anlaufscheiben (32, 36) gebildet sind, welche über die Federmittel (32, 34) am Gehäuse (20) abgestützt sind.

6. Aggregat nach einem der Ansprüche 1 bis 4, dadurch gekennzeichnet, daß die Schultern (124) durch Anlaufelemente (138) gebildet sind, welche über die Federmittel (134) an der Schneckenwelle (116) abgestützt sind.
